# EUROPEAN PATENT SPECIFICATION

(11) **EP 2 646 769 B1**
(45) Date of publication and mention of the grant of the patent: **01.01.2020**
(21) Application number: 10860388.7
(22) Date of filing: 29.11.2010
(51) Int. Cl.: G01B 11/24, G06T 15/00, G01B 11/25, G06T 19/00

(54) **SYSTEM AND METHOD FOR CREATING A THREE-DIMENSIONAL IMAGE FILE**
SYSTEM UND VERFAHREN ZUR ERZEUGUNG EINER DREIDIMENSIONALEN BILDDATEI
SYSTÈME ET PROCÉDÉ DE CRÉATION D'UN FICHIER D'IMAGE TRIDIMENSIONNELLE

(43) Date of publication of application: 09.10.2013
(73) Proprietor: Hewlett-Packard Development Company, L.P., Spring TX 77389 (US)
(72) Inventor: ROTHENBUHLER, Dan, Boise, Idaho 83714 (US); MAJEWICZ, Peter, Boise, Idaho 83714 (US); SMITH, Kenneth, K., Boise, Idaho 83714 (US)
(74) Representative: HGF Limited
(86) International application number: PCT/US2010/058218
(87) International publication number: WO 2012/074505

(56) References cited:
- US-A- 6 122 062
- US-A1- 2005 018 209
- US-A1- 2006 210 148
- US-A1- 2007 085 849
- US-A1- 2007 229 850
- US-A1- 2008 101 688
- US-A1- 2010 157 388

## Description

### BACKGROUND

Three-dimensional ("3D") images are used in a variety of contexts such as e-commerce to display various objects (e.g., items for sale). For example, an online storefront displays a 3D rendering of an item that is sold. Such a 3D image file may permit a viewer to manipulate the item to view the item from a different angle, or to zoom in or zoom out on the item.

Three-dimensional image files can be generated by scanning a laser across the object and recording distance and angle values. These values are imported into a Computer Aided Design ("CAD") program that generates a surface of the object. However, features such as colors and textures are not captured by laser scanners; to add such detail, extensive post-scan processing is required, for example mapping an image to the contours of the surface. The hardware and processing software required for laser scanning are both expensive and cumbersome.

US2007085849 relates to determining surface topology of a three-dimensional (3D) structure, based on a structured pattern that is projected onto the surface structure, and images of the pattern superposed on the structured surface are analysed to provide surface coordinates of the structure. The pattern comprises a plurality of unique color edges defined between pairs of differently-colored stripes.

US2005018209 relates to an optical 3D digitizer with an enlarged non-ambiguity zone, comprising a structured light projector for projecting a fringe pattern over a target area, the fringe pattern having a shiftable position over the target area. First and second cameras having overlapping measurement fields are directed toward the target area and positioned with respect to the projector to define distinct triangulation planes therewith. The second camera has a larger non-ambiguity depth than the first camera. A computer evaluates a same set of camera-projector related functions from images captured by the cameras including the projected pattern at shifted positions, builds low depth resolution and degenerated 3D models from the camera-projector related functions evaluated with respect to the second and first cameras respectively, determines chromatic texture from the images, and builds a complete textured 3D model from data corresponding between the low depth resolution and degenerated 3D models within a tolerance range.

US2006210148 relates to generating a three-dimensional model of an object. A storage unit stores three-dimensional coordinates of plural vertices on a standard model of the object, an image input unit inputs plural input images acquired by photographing the object, a first detection unit detects a coordinate of a first point corresponding to a vertex on the standard model, from a first image selected from among the plural input images, a second detection unit that detects a coordinate of a second point corresponding to the coordinate of the first point, from a second image other than the first image, a depth computation unit computes a depth of the first point by using the coordinates of the first and second points, and a first update unit updates the three-dimensional coordinate on the standard model based on the coordinate of the first point and the calculated depth.

US2010157388 relates to scanning an object. The object is placed on a scanning platform. The scanner has a plurality of cameras positioned around the object to be scanned. The scanned object can be a foot, among other things, and the scanner is positioned at a predetermined incline so that the foot is evenly supported. A positioning system including at least one sensor is used to determine if the foot is located within a predetermined scanning area. The method can be used to measure foot dimensions for the production of shoe lasts and construction of shoes. The method can be used in a system for selecting shoes that properly fit.

### BRIEF DESCRIPTION OF THE DRAWINGS

For a detailed description of example embodiments of the invention, reference will now be made to the accompanying drawings in which:
Figure 1a shows a system in accordance with various embodiments;
Figure 1b shows a component of the system of Figure 1a in accordance with various embodiments;
Figure 1c shows a component of the system of Figure 1a in accordance with various embodiments;
Figure 2 shows an apparatus in accordance with various embodiments;
Figure 3 shows a method flow chart in accordance with various embodiments; and
Figure 4 shows another method flow chart in accordance with various embodiments.

### NOTATION AND NOMENCLATURE

In the following discussion and in the claims, the terms "including" and "comprising" are used in an open-ended fashion, and thus should be interpreted to mean "including, but not limited to...." Also, the term "couple" or "couples" is intended to mean either an indirect, direct, optical or wireless electrical connection. Thus, if a first device couples to a second device, that connection may be through a direct electrical connection, through an indirect electrical connection via other devices and connections, through an optical electrical connection, or through a wireless electrical connection.

In the following discussion and in the claims, the term "object image" means an image of a subject that captures the visual details of the subject such as colors or textures, similar to a conventional photograph. The term "pattern image" means an image of a subject that captures a projected pattern, such as an orthogonal grid, reflected by the subject from a light source. The projected pattern captured in the pattern image differs from the known pattern (*e.g*., an orthogonal grid) as projected onto a reference surface based on elevation of the subject relative to the reference surface. Thus, comparing the projected pattern captured in the pattern image to the known pattern enables the determination of elevation (*i.e*., 3D) data of the subject.

### DETAILED DESCRIPTION

The invention is defined in claims 1 and 5. Embodiments of the invention are set out in the dependent claims. Examples not falling under the terms of the definition of the claims do not form part of the present invention even though they may be referred to as "embodiments" in the description. They are merely examples useful for understanding the present invention.

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

In accordance with various embodiments, a 3D scanner generates a 3D image file of a subject by determining elevation data of a subject, capturing an object image of the subject with an optical sensor and assigning an elevation to each pixel of the object image based on the elevation data of the subject. Pixel coordinates, image data (*e.g*., a color) and the determined elevation for the pixel may be stored in a suitable data structure, which is used to create the 3D image file.

The elevation data of a subject may be determined in various manners. For example, elevation data may be determined by measuring the difference between a known pattern projected onto the subject compared to the known pattern projected onto a reference surface (*e.g*., a flat surface positioned a known distance away from an optical sensor). For example, the pattern may be an orthogonal grid and in some embodiments, the spacing of the grid may be adjusted. A subject that is not flat, or is not the same as the reference surface, will cause the grid to be perceived in a pattern image as distorted, thus allowing elevation data of the subject to be determined. Elevation data is determined in this manner using a single optical sensor, however more than one optical sensor may be additionally employed. An example of determining elevation data of a subject based on a projected pattern is disclosed in U.S. Pat. No. 6,510,244 entitled "Method and System for Acquiring a Three-Dimensional Shape Description".

Elevation data may alternately be determined through stereoscopic imaging. Multiple optical sensors, each having a coincident field of view of the subject, capture object images of the subject. The optical sensors are separated by a known distance and arranged in a known orientation. Identical features of the subject are identified in each image and the elevation of those features may be determined by measuring the parallax. Parallax is an apparent displacement of difference in the apparent position of an object viewed along two different lines of sight. Determining elevation data through stereoscopic imaging requires two or more optical sensors, unlike determining elevation data through the projection of a known pattern.

Furthermore, elevation data may be determined through a combination of projection of a known pattern and stereoscopic imaging. Such a combination offers increased levels of detail and accuracy. Each method may employ one or more light sources to illuminate the subject, project a grid pattern, or a combination of the two. Each method of determining elevation data offers various benefits and drawbacks; however, in accordance with various embodiments, any method of determining elevation data of a subject is intended to be included in the present disclosure.

However, elevation data on its own is insufficient to produce a 3D image file of a subject. Elevation data merely allows the surface of the subject to be determined, but without any detail as to the actual appearance (*e.g*., colors, textures) of the subject, which is helpful to produce a usable, informative 3D image file. Conventional methods of mapping a static image file onto a 3D surface are both time-consuming and expensive. In accordance with various embodiments, image data and elevation data are combined by assigning each pixel in a captured object image an elevation value (*e.g*., an elevation relative to a reference surface on which the subject sits) based on the determined elevation data. The resulting set of data, including image data and elevation data for each pixel, may be converted into a 3D image file format.

In accordance with various embodiments, further image processing or enhancement may be applied to the 3D image file to add distance cues, such as shading, variable color saturation, variable fading, or other techniques to give the illusion of depth. Additional 3D image files may be generated by moving the subject and capturing object images from a different orientation (*e.g*., turning the subject around, flipping the subject over). An image stitching algorithm, similar to those used to generate panoramic photos, may be applied to the various 3D image files of a subject to create a full 3D image file, or a 3D image file that permits viewing of the subject from any angle.

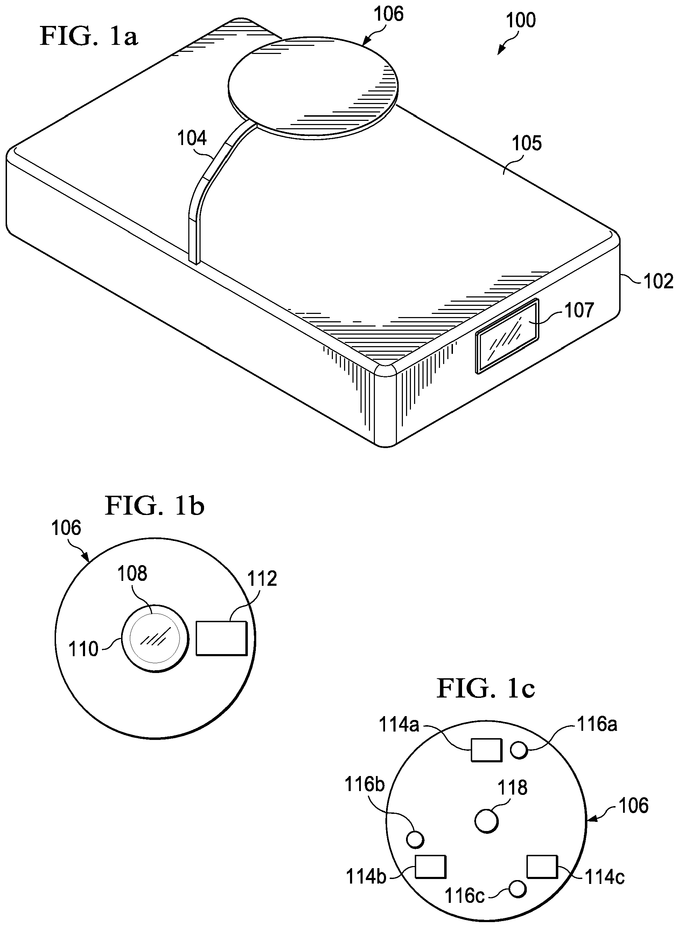

Figure 1a shows a system 100 for creating 3D image files in accordance with various embodiments. The system includes a housing 102 coupled to an imaging device 106 by way of a support arm 104. The housing 102 includes a surface 105 on which a subject may be placed. The housing 102 may also house a processing unit or alternatively may couple to a processing unit of an external device. In some embodiments, the housing 102 may be a printer. The housing 102 further comprises a control panel 107, for example a touch-screen LCD.

Figure 1b shows the imaging device 106 viewed from the underside (e.g., from the surface 105 facing upward). In the example of Figure 1b, the imaging device 106 comprises a light source 108 and an optical sensor 112. The light source 108 may comprise a light-emitting diode ("LED") or arrays of multiple LEDs; however, other light-producing elements may be similarly used. Additionally, the light source 108 may further comprise a focusing mechanism 110 to direct the illumination of the light source 108. The focusing mechanism 110 may comprise a Fresnel lens, a back-reflector, diffuser or other focusing mechanism known by those one skilled in the art. The optical sensor 112 may be a complementary metal oxide semiconductor ("CMOS") optical sensor. In alternate embodiments, the optical sensor 112 may be a charge coupled device ("CCD") or any suitable device for image capture. The optical sensor 112 captures both pattern images and object images.

In accordance with various embodiments, the light source 108 is configured to project a pattern (*e.g*., a grid) onto the surface 105 or a subject on the surface 105, which may be subsequently captured by the optical sensor 112 in a pattern image. A variable size grid may be generated by projecting the illuminating light through, for example, an LCD screen, which may be a substitute for the focusing mechanism 110 or in addition to the focusing mechanism 110. Alternatively, other devices may be used to project the pattern, such as a diffraction grating, an interference pattern system, or a digital micromirror device. The embodiment of the imaging device 106 shown in Figure 1b permits elevation data of the subject to be calculated based solely on the measurement of parallax because only one optical sensor is utilized. As discussed above, one optical sensor coupled with the projection of a known pattern is sufficient to determine elevation data of the subject. The light source 108 is additionally configured to illuminate a subject in a manner suitable for capturing an object image of the subject by the optical sensor 112.

Figure 1c shows an alternate embodiment of the imaging device 106 also viewed from the underside. The alternate imaging device 106 comprises light sources 116a, 116b, 116c, 118 and optical sensors 114a, 114b, 114c. In this embodiment, the light source 118 is configured to project a pattern (*e.g*., a grid) onto the surface 105 and a subject and the light sources 116a, 116b, 116c are configured to illuminate the surface 105 and the subject while one or more of the optical sensors 114a, 114b, 114c capture an image of the surface 105 and the subject. The captured images using the light source 118 are pattern images and the captured images using the light sources 116a, 116b, 116c are object images. The embodiment of imaging device 106 shown in Figure 1c permits elevation data of the subject to be calculated based on both stereoscopic imaging principles as well as measurement of a parallax based on the projection of a pattern, permitting a higher level of elevation data detail to be obtained.

The imaging device 106 may be configured in various ways, taking advantage of stereoscopic imaging, measuring a parallax based on projection of a pattern, or the combination of the two. The number of light sources and optical sensors may vary depending on the particular embodiment. Additionally, multiple object images and multiple pattern images may be captured by the optical sensors before creating a 3D image file.

A correspondence may be determined between object images of the same subject captured by different optical sensors. Each object image from a different optical sensor will have a slightly different view of the subject, and thus the correspondence between object images may be determined so that elevation data may be correctly mapped to the appropriate features of the subject. Correspondence between two images may be determined by, for example, determining whether one location in an object image from one optical sensor looks or seems like another location in an object image captured by a different optical sensor. Correspondence between two object images may alternatively be determined by, for example, identifying features in an object image from one optical sensor and determining whether the layout of a subset of features in an object image from a different optical sensor is similar.

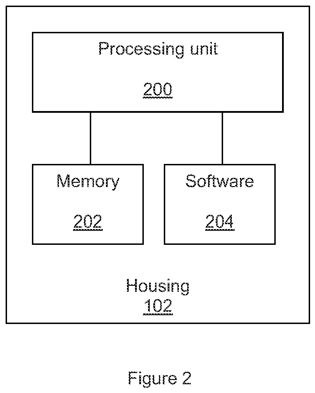

Figure 2 shows an embodiment of housing 102 as comprising a processing unit 200 (*e.g*., a microprocessor) coupled to a memory 202 and software 204 in accordance with various embodiments. The software 204 may be stored in memory 202 or in another storage device. In alternate embodiments, the processing unit 200, memory 202 and software 204 may be coupled to the housing 102, but reside in a device external to the housing 102. The processing unit 200 is configured to create 3D image files by receiving and processing various images from one or more of the optical sensors 108, 114a, 114b, 114c, which are coupled to the housing 102 by way of the imaging device 106 and support arm 104 as shown in Figures 1a-c. A user may place a subject on the surface 105 to create a 3D image file of the subject. The system 100, which includes or is coupled to the processing unit 200, operates to create the 3D image file of the subject. Referring back to Figure 1b for example, the light source 108 illuminates the subject with a pattern (*e.g*., a grid) and the optical sensor 112 captures a pattern image. The processing unit 200 determines elevation data of the subject based on the pattern image. For example, if the pattern is an orthogonal grid when projected onto a reference surface, the processing unit 200 determines differences in the captured pattern in the pattern image and the pattern when projected onto the reference surface. The processing unit 200 determines elevation data based on these differences.

The light source 108 also illuminates the subject in a manner suitable for photographing the subject (*e.g*., a flash, longer-duration lighting) and the optical sensor 112 captures an object image. In accordance with various embodiments, the elevation data represents pixel-by-pixel elevation values, each value corresponding to a pixel of the object image. Thus, the processing unit 200 associates or assigns each pixel of the object image with an elevation value. This association may be, for example, stored in any suitable data structure in memory 202. The following table is an exemplary data structure that associates each pixel coordinate with a color value and an elevation value:

| **Pixel Coordinate** | **Pixel Color** | **Pixel Elevation** |
|---|---|---|
| 50,42 | Red | 1.4" |
| 50,43 | Green | 1.5" |
| 50,44 | Blue | 1.6" |
| ... | ... | ... |

The processing unit 200 converts the image data and the elevation data for the pixels into a 3D image file.

The processing unit 200 also may combine 3D image files of a subject, for example by stitching together 3D image files created from different viewing angles or orientations. The resulting 3D image file permits a user to view the subject from a greater variety of angles, which could not normally be achieved with a 3D image file created from a single viewing angle of the subject. In some embodiments, the resulting 3D image file is a full 3D image file, permitting a user to view the subject from any angle. Although discussed with respect to Figure 1b, the processing unit 200 operates in a similar manner independent of the arrangement of light sources and optical sensors. In some embodiments, the software 204 is stored in a computer readable storage (*e.g*., RAM, HDD). Additionally, although the processor 200 has been disclosed as performing various operations, in alternate embodiments the processor 200 performs one or more of such operations through the execution of software 204.

Referring back to Figure 1a, in an exemplary embodiment the control panel 107 is a touch-screen LCD that permits a user to view and manipulate a 3D image file. Manipulation includes rotating the viewing angle of the subject, zooming in or zooming out on the subject, and other similar image processing schemes. Once a user achieves a suitable viewing angle of the subject on the control panel 107, the user may print the view of the subject on the printer 102.

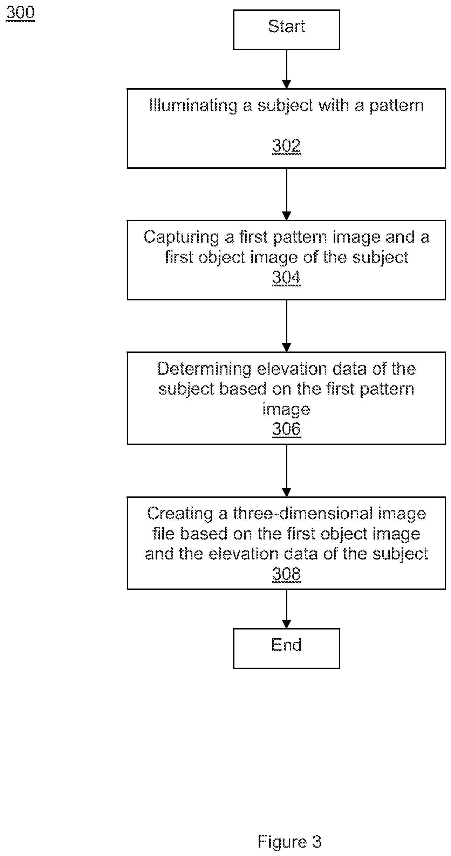

Figure 3 shows a method 300 in accordance with various embodiments. The method 300 begins with illuminating a subject with a pattern (block 302). In an exemplary embodiment, a light source 108 illuminates the subject. The light source 108 may comprise a light-emitting diode ("LED") or arrays of multiple LEDs; however, other light-producing elements may be similarly used. Additionally, the light source 108 may further comprise a focusing mechanism 110 to direct the illumination of the light source 108. In accordance with various embodiments, the light source 108 is configured to project a pattern (*e.g*., a grid) onto the surface 105 or a subject on the surface 105, which may be subsequently captured by the optical sensor 112 in a pattern image. A variable size grid may be generated by projecting the illuminating light through, for example, an LCD screen, which may be a substitute for the focusing mechanism 110 or in addition to the focusing mechanism 110.

The method 300 continues with capturing a first pattern image and a first object image of the subject (block 304). In an exemplary embodiment, an optical sensor 112 captures the pattern image and the object image. The optical sensor 112 is a complementary metal oxide semiconductor ("CMOS") optical sensor. In alternate embodiments, the optical sensor 112 is a charge coupled device ("CCD") or any suitable device for image capture. The optical sensor 112 captures both pattern images and object images, depending on the illumination of the subject.

The method 300 then continues with determining elevation data of the subject based on the first pattern image (block 306). In an exemplary embodiment, a processing unit 200 determines the elevation data of the subject. For example, where the pattern is an orthogonal grid when projected onto a reference surface, the processing unit 200 determines differences in the captured pattern in the pattern image and the pattern when projected onto the reference surface. The processing unit 200 determines elevation data based on these differences.

The method 300 further continues with creating a three-dimensional image file based on the first object image and the elevation data of the subject (block 308) and ends. In accordance with various embodiments, the elevation data represents pixel-by-pixel elevation values, each value corresponding to a pixel of the object image captured by the optical sensor 112. Thus, the processing unit 200 may associate or assign each pixel of the object image with an elevation value. This association may be, for example, stored in any suitable data structure in memory 202. The processing unit 200 converts the image data and the elevation data for the pixels into a 3D image file.

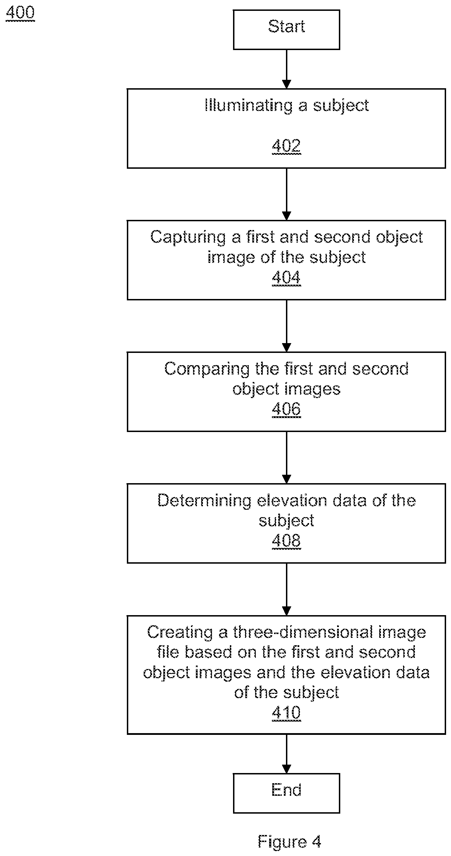

Figure 4 shows another method 400 in accordance with various embodiments. The method begins with illuminating a subject (block 402). In an exemplary embodiment, a light source 108, 116a, 116b, 116c illuminates the subject, similar to above. In an example not according to the invention, the light source 108, 116a, 116b, 116c does not need to be capable of illuminating the subject with a pattern. The method continues with capturing a first and second object image of the subject (block 404). In accordance with various embodiments, each of the object images is captured by a different optical sensor (*e.g*., optical sensors 114a, 114b, 114c) each having a coincident field of view of the subject. In alternate embodiments, more than two object images may be captured by two or more optical sensors.

The method 400 then continues with comparing the first and second object images (block 406) and determining elevation data of the subject (block 408). The optical sensors 114a, 114b, 114c are separated by a known distance and arranged in a known orientation. In accordance with various embodiments, the processing unit 200 may identify identical features of the subject in each object image and determine the elevation of those features by measuring the parallax. The processing unit 200 determines elevation data of the subject between the identical features based on the proximity to the identical feature.

The method 400 further continues with creating a three-dimensional image file based on the first and second object images and the elevation data of the subject (block 410) and ends. As discussed above with respect to Figure 3, the elevation data represents pixel-by-pixel elevation values, each value corresponding to a pixel of the object images captured by the optical sensors 114a, 114b, 114c. Thus, the processing unit 200 may associate or assign each pixel of the object images with an elevation value. This association may be, for example, stored in any suitable data structure in memory 202. The processing unit 200 converts the image data and the elevation data for the pixels into a 3D image file.

The above discussion is meant to be illustrative of the principles and of various embodiments of the present invention. Numerous variations and modifications will become apparent to those skilled in the art once the above disclosure is fully appreciated. For example, the number of optical sensors and light sources may vary, and additional images may be captured before creating a 3D image file. Furthermore, each 3D image file may undergo further processing steps before being finalized and output to the user. The invention is defined by the appended claims.

## Claims

1. A system (100) comprising:
a light source (108; 118) configured to illuminate a subject with a pattern;
a first optical sensor (112; 114a) configured to capture a first pattern image and a first object image of the subject;
a second optical sensor (114b) configured to capture a second pattern image and a second object image of the subject; and
a processing unit (200) configured to:
determine a correspondence between the first and second object images;
determine elevation data of the subject based on the first and second pattern images and the correspondence between the first and second object images; and
create a three-dimensional image file based on the first and second object images and the elevation data of the subject,
wherein the processing unit (200) associates or assigns each pixel of the first object image with an elevation value based on the elevation data.

2. The system (100) of claim 1 further comprising:
a control panel (107) configured to allow a user to manipulate the three-dimensional image file; and
a printer (102) configured to print the manipulated image file.

3. The system (100) of claim 1 wherein the processor determines elevation data based on the difference between the pattern projected onto a reference surface and the pattern image.

4. The system (100) of claim 1 wherein the processor is further configured to enhance the three-dimensional image file to add distance cues.

5. A method comprising:
illuminating, by a light source (108; 118), a subject with a pattern;
capturing, by a first optical sensor (112; 114a), a first pattern image and a first object image of the subject;
capturing, by a second optical sensor (114b), a second pattern image and a second object image of the subject;
determining a correspondence between the first and second object images;
determining elevation data of the subject based on the first and second pattern images and the correspondence between the first and second object images;
creating a three-dimensional image file based on the first and second object images and the elevation data of the subject,
wherein creating the three-dimensional image file comprises associating or assigning each pixel of the first object image with an elevation value based on the elevation data.

6. The method of claim 5 wherein determining elevation data further comprises determining elevation data based on the difference between the pattern projected onto a reference surface and the pattern image.

7. The method of claim 5 wherein creating a three-dimensional image file further comprises mapping the first object image into a three-dimensional space based on the elevation data of the subject.

8. The method of claim 5 further comprising:
capturing, by the first optical sensor (112; 114a), an additional pattern image and an additional object image of the subject;
determining additional elevation data of the subject based on the additional pattern image;
creating an additional three-dimensional image file based on the additional object image and the elevation data of the subject; and
combining the three-dimensional image file and the additional three-dimensional image file to create a full three-dimensional image file;
wherein the orientation of the subject is different in the additional pattern and object images than in the first pattern and object images.

9. The method of claim 5 further comprising enhancing the three-dimensional image file to add distance cues.

## Patentansprüche

1. System (100), Folgendes umfassend:
eine Lichtquelle (108; 118), welche konfiguriert ist, um ein Subjekt mit einem Muster zu beleuchten;
einen ersten optischen Sensor (112; 114a), welcher konfiguriert ist, um ein erstes Musterbild und ein erstes Objektbild des Subjekts aufzunehmen;
einen zweiten optischen Sensor (114b), welcher konfiguriert ist, um ein zweites Musterbild und ein zweites Objektbild des Subjekts aufzunehmen; und
eine Verarbeitungseinheit (200), welche konfiguriert ist, zum:
Bestimmen einer Übereinstimmung zwischen dem ersten und dem zweiten Objektbild;
Bestimmen von Höhendaten des Subjekts, basierend auf dem ersten und dem zweiten Musterbild und der Übereinstimmung zwischen dem ersten und dem zweiten Objektbild; und
Erzeugen einer dreidimensionalen Bilddatei, basierend auf dem ersten und dem zweiten Objektbild und den Höhendaten des Subjekts,
wobei die Verarbeitungseinheit (200), basierend auf den Höhendaten, jedem Pixel des ersten Objektsbilds einen Höhenwert zuordnet oder zuweist.

2. System (100) nach Anspruch 1, ferner Folgendes umfassend:
ein Steuerpult (107), welches konfiguriert ist, um einem Benutzer zu ermöglichen, die dreidimensionale Bilddatei zu manipulieren; und
einen Drucker (102), welcher konfiguriert ist, um die manipulierte Bilddatei zu drucken.

3. System (100) nach Anspruch 1, wobei der Prozessor Höhendaten, basierend auf dem Unterschied zwischen dem Muster, welches auf einer Referenzfläche projiziert wird, und dem Musterbild bestimmt.

4. System (100) nach Anspruch 1, wobei der Prozessor ferner konfiguriert ist, um die dreidimensionale Bilddatei so zu verbessern, dass Abstandshinweise hinzugefügt werden.

5. Verfahren, Folgendes umfassend:
Beleuchten, durch eine Lichtquelle (108; 118), eines Subjekts mit einem Muster;
Aufnehmen, durch einen ersten optischen Sensor (112; 114a), eines ersten Musterbilds und eines ersten Objektbilds des Subjekts;
Aufnehmen, durch einen zweiten optischen Sensor (114b), eines zweiten Musterbilds und eines zweiten Objektbilds des Subjekts;
Bestimmen einer Übereinstimmung zwischen dem ersten und dem zweiten Objektbild;
Bestimmen von Höhendaten des Subjekts, basierend auf dem ersten und dem zweiten Musterbild und der Übereinstimmung zwischen dem ersten und dem zweiten Objektbild;
Erzeugen einer dreidimensionalen Bilddatei, basierend auf dem ersten und dem zweiten Objektbild und den Höhendaten des Subjekts,
wobei das Erzeugen der dreidimensionalen Bilddatei das Zuordnen oder Zuweisen eines Höhenwerts, basierend auf den Höhendaten, zu jedem Pixel des ersten Objektbilds umfasst.

6. Verfahren nach Anspruch 5, wobei das Bestimmen der Höhendaten ferner das Bestimmen von Höhendaten basierend auf dem Unterschied zwischen dem Muster, welches auf eine Referenzfläche projiziert wird, und dem Musterbild umfasst.

7. Verfahren nach Anspruch 5, wobei das Erzeugen einer dreidimensionalen Bilddatei ferner das Abbilden des ersten Objektbilds in einen dreidimensionalen Raum, basierend auf den Höhendaten des Subjekts, umfasst.

8. Verfahren nach Anspruch 5, ferner Folgendes umfassend:
Aufnehmen, durch den ersten optischen Sensor (112; 114a), eines zusätzlichen Musterbilds und eines zusätzlichen Objektbilds des Subjekts;
Bestimmen von zusätzlichen Höhendaten des Subjekts, basierend auf dem zusätzlichen Musterbild;
Erzeugen einer zusätzlichen dreidimensionalen Bilddatei, basierend auf dem zusätzlichen Objektbild und den Höhendaten des Subjekts; und
Kombinieren der dreidimensionalen Bilddatei und der zusätzlichen dreidimensionalen Bilddatei, um eine vollständige dreidimensionale Bilddatei zu erzeugen;
wobei die Ausrichtung des Subjekts in den zusätzlichen Muster- und Objektbildern sich von der Ausrichtung in den ersten Muster- und Objektbildern unterscheidet.

9. Verfahren nach Anspruch 5, ferner umfassend das Verbessern der dreidimensionalen Bilddatei, um Abstandshinweise hinzuzufügen.

## Revendications

1. Système (100) comprenant :
une source de lumière (108 ; 118) conçue pour éclairer un sujet avec un motif ;
un premier capteur optique (112 ; 114a) conçu pour capturer une première image de motif et une première image d'objet du sujet ;
un second capteur optique (114b) conçu pour capturer une seconde image de motif et une seconde image d'objet du sujet ; et
une unité de traitement (200) conçue pour :
déterminer une correspondance entre les première et seconde images d'objet ;
déterminer des données d'élévation du sujet sur la base des première et seconde images de motif et de la correspondance entre les première et seconde images d'objet ; et
créer un fichier d'images tridimensionnelles sur la base des première et seconde images d'objet et des données d'élévation du sujet,
l'unité de traitement (200) associant ou attribuant chaque pixel de la première image d'objet avec une valeur d'élévation sur la base des données d'élévation.

2. Système (100) selon la revendication 1, comprenant en outre :
un panneau de commande (107) conçu pour permettre à un utilisateur de manipuler un fichier d'images tridimensionnelles ; et
une imprimante (102) conçue pour imprimer le fichier d'images manipulé.

3. Système (100) selon la revendication 1, dans lequel le processeur détermine les données d'élévation sur la base de la différence entre le motif projeté sur une surface de référence et l'image de motif.

4. Système (100) selon la revendication 1, dans lequel le processeur est en outre conçu pour améliorer le fichier d'images tridimensionnelles en y ajoutant des repères de distance.

5. Procédé consistant à :
éclairer, au moyen d'une source de lumière (108 ; 118), un sujet avec un motif ;
capturer, au moyen d'un premier capteur optique (112 ; 114a), une première image de motif et une première image d'objet du sujet ;
capturer, au moyen d'un second capteur optique (114b), une seconde image de motif et une seconde image d'objet du sujet ;
déterminer une correspondance entre les première et seconde images d'objet ;
déterminer des données d'élévation du sujet sur la base des première et seconde images de motif et de la correspondance entre les première et seconde images d'objet,
créer un fichier d'images tridimensionnelles sur la base des première et seconde images d'objet et des données d'élévation du sujet,
la création du fichier d'images tridimensionnelles consistant à associer ou à attribuer chaque pixel de la première image d'objet avec/à une valeur d'élévation sur la base des données d'élévation.

6. Procédé selon la revendication 5, dans lequel la détermination des données d'élévation consiste en outre à déterminer des données d'élévation sur la base de la différence entre le motif projeté sur une surface de référence et l'image de motif.

7. Procédé selon la revendication 5, dans lequel la création d'un fichier d'images tridimensionnelles consiste en outre à mapper la première image d'objet dans un espace tridimensionnel sur la base des données d'élévation du sujet.

8. Procédé selon la revendication 5, consistant en outre à :
capturer, au moyen du premier capteur optique (112 ; 114a), une image de motif supplémentaire et une image d'objet supplémentaire du sujet ;
déterminer des données d'élévation supplémentaires du sujet sur la base de l'image de motif supplémentaire ;
créer un fichier d'images tridimensionnelles sur la base de l'image d'objet
supplémentaire et des données d'élévation du sujet ; et à
combiner le fichier d'images tridimensionnelles et le fichier d'images tridimensionnelles supplémentaire pour créer un fichier d'images tridimensionnelles complet ;
l'orientation du sujet étant différente dans le motif supplémentaire et dans les images d'objets supplémentaires par rapport au premier motif et aux premières images d'objet.

9. Procédé selon la revendication 5, consistant en outre à améliorer le fichier d'images tridimensionnelles en y ajoutant des repères de distance.
